# EUROPEAN PATENT SPECIFICATION

(11) **EP 3 310 479 B1**
(45) Date of publication and mention of the grant of the patent: **12.11.2025**
(21) Application number: 16733810.2
(22) Date of filing: 16.06.2016
(51) Int. Cl.: B01J 37/02, B01J 37/03, B01J 35/00, B01J 23/42, B01D 53/94, B01J 29/44, B01J 29/72, B01J 29/76, F01N 3/20

(54) **AMMONIA SLIP CATALYST WITH LOW N2O FORMATION**
AMMONIAKSCHLUPFKATALYSATOR MIT NIEDRIGER N2O-BILDUNG
CATALYSEUR DE CONVERSION D'EXCÈS D'AMMONIAC À FAIBLE FORMATION DE N2O

(30) Priority: 18.06.2015 US 201562181378 P
(43) Date of publication of application: 25.04.2018
(73) Proprietor: Johnson Matthey Public Limited Company, London EC2V 7AD (GB)
(72) Inventor: LU, Jing, Wayne, Pennsylvania 19087 (US); FEDEYKO, Joseph, Wayne, Pennsylvania 19087 (US); CHEN, Hai-Ying, Wayne, Pennsylvania 19087 (US); ARULRAJ, Kanneshalingham, Royston Hertfordshire SG8 5HE (GB)
(74) Representative: Johnson Matthey Plc
(86) International application number: PCT/US2016/037866
(87) International publication number: WO 2016/205509

(56) References cited:
- US-A1- 2008 292 519
- US-A1- 2010 111 796
- US-A1- 2014 157 763
- US-A1- 2015 037 233

## Description

### FIELD OF THE INVENTION

The invention relates to ammonia slip catalysts (ASC), articles containing ammonia slip catalysts and methods of manufacturing and using such articles to reduce ammonia slip.

### BACKGROUND OF THE INVENTION

Hydrocarbon combustion in diesel engines, stationary gas turbines, and other systems generates exhaust gas that must be treated to remove nitrogen oxides (NOx), which comprises NO (nitric oxide) and NO₂ (nitrogen dioxide), with NO being the majority of the NOx formed. NOx is known to cause a number of health issues in people as well as causing a number of detrimental environmental effects including the formation of smog and acid rain. To mitigate both the human and environmental impact from NOₓ in exhaust gas, it is desirable to eliminate these undesirable components, preferably by a process that does not generate other noxious or toxic substances.

Exhaust gas generated in lean-burn and diesel engines is generally oxidative. NOx needs to be reduced selectively with a catalyst and a reductant in a process known as selective catalytic reduction (SCR) that converts NOx into elemental nitrogen (N₂) and water. In an SCR process, a gaseous reductant, typically anhydrous ammonia, aqueous ammonia, or urea, is added to an exhaust gas stream prior to the exhaust gas contacting the catalyst. The reductant is absorbed onto the catalyst and the NOₓ is reduced as the gases pass through or over the catalyzed substrate. In order to maximize the conversion of NOx, it is often necessary to add more than a stoichiometric amount of ammonia to the gas stream. However, release of the excess ammonia into the atmosphere would be detrimental to the health of people and to the environment. In addition, ammonia is caustic, especially in its aqueous form. Condensation of ammonia and water in regions of the exhaust line downstream of the exhaust catalysts can result in a corrosive mixture that can damage the exhaust system. Therefore the release of ammonia in exhaust gas should be eliminated. In many conventional exhaust systems, an ammonia oxidation catalyst (also known as an ammonia slip catalyst or "ASC") is installed downstream of the SCR catalyst to remove ammonia from the exhaust gas by converting it to nitrogen. The use of ammonia slip catalysts can allow for NOₓ conversions of greater than 90% over a typical diesel driving cycle.

US 2008/292519 A1 discloses a catalyst for the conversion of NH₃ and NOₓ to N₂, comprising combination of platinum on a siliceous support comprising silica and Fe-BEA zeolite.

It would be desirable to have a catalyst that provides for both NOx removal by SCR and for selective ammonia conversion to nitrogen, where ammonia conversion occurs over a wide range of temperatures in a vehicle's driving cycle, and minimal nitrogen oxide and nitrous oxide byproducts are formed.

### SUMMARY OF THE INVENTION

In the first aspect, the invention relates to a catalyst comprising a combination of platinum on a support with low ammonia storage and a first SCR catalyst, wherein the first SCR catalyst is a Cu-SCR catalyst comprising copper and a molecular sieve or an Fe-SCR catalyst comprising iron and a molecular sieve. The support with low ammonia storage is a siliceous support. The siliceous support consists of a silica or a zeolite with silica-to-alumina ratio of at ≥500. The combination of platinum on a support with low ammonia storage is a blend of platinum on a support with low ammonia storage with a first SCR catalyst. The catalyst further comprises a second SCR catalyst, where the second SCR catalyst is located adjacent to the blend of platinum on a support with low ammonia storage with the first SCR catalyst and the second SCR catalyst at least partially overlaps the blend of platinum on a support with low ammonia storage and the first SCR catalyst. The catalyst can further comprise a third SCR catalyst, where the third SCR catalyst is located adjacent to the blend of platinum on a support with low ammonia storage with the first SCR catalyst and the blend of platinum on a support with low ammonia storage with the first SCR catalyst at least partially overlaps the third SCR catalyst. The catalysts can provide an improvement in N₂ yield from ammonia at a temperature from about 250 °C to about 350 °C compared to a catalyst comprising a comparable formulation in which the first SCR catalyst is present as a first layer and the supported platinum is present in a second layer and gas comprising NH₃ passes through the first layer before passing through the second layer.

In another aspect, the invention relates to methods of making catalysts comprising a blend of platinum on a support with low ammonia storage as claimed herein.

In yet another aspect, the invention relates to articles comprising catalysts as claimed herein, and the use of these articles in providing an improvement in N₂ yield from ammonia at a temperature from about 250 °C to about 350 °C.

In still another aspect, the invention relates to exhaust systems comprising catalysts as claimed herein, and articles containing these catalysts.

In yet another aspect, the invention relates to methods of improving the N₂ yield from ammonia in an exhaust gas at a temperature from about 250 °C to about 350 °C by contacting an exhaust gas comprising ammonia with a catalyst as claimed herein.

In still another aspect, the invention relates to methods of reducing N₂O formation from NH₃ in an exhaust gas, the method comprising contacting an exhaust gas comprising ammonia with a catalyst as claimed herein.

### BRIEF DESCRIPTION OF THE DRAWINGS

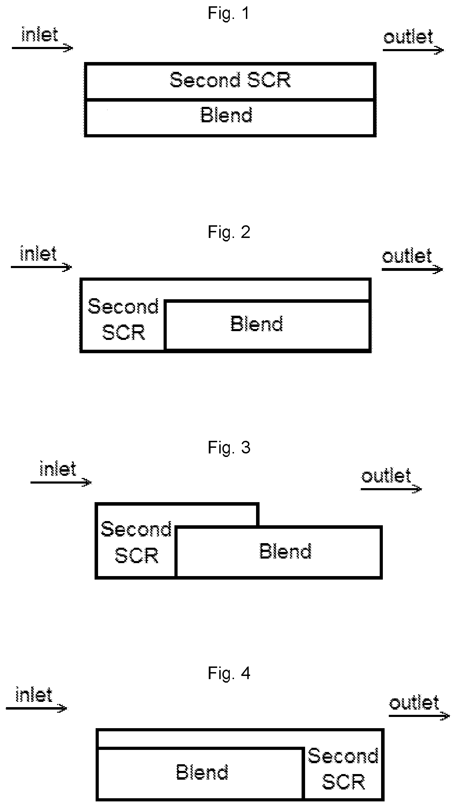

Figures 1 - 7 are schematic representations of configurations of catalysts comprising a blend of platinum on a support with low ammonia storage with a first SCR catalyst. The portion of the catalyst comprising a blend of platinum on a support with low ammonia storage with a first SCR catalyst is labeled as "blend" in these figures.
Fig. 1 depicts a configuration in which the second SCR is positioned in the exhaust gas flow over the blend and the second SCR covers the entire blend.
Fig. 2 depicts a configuration in which the second SCR is positioned in the exhaust gas flow before the blend and the second SCR covers the entire blend.
Fig. 3 depicts a configuration in which the second SCR is positioned in the exhaust gas flow before the blend and the second SCR covers a portion of, but not the entire blend.
Fig. 4 depicts a configuration in which the second SCR covers the entire blend and a portion of the second SCR is positioned in the exhaust gas flow after the blend.
Fig. 5 depicts a configuration in which the second SCR covers a portion of, but not the entire blend and a portion of the second SCR is positioned in the exhaust gas flow after the blend.
Fig. 6 depicts a configuration in which a third SCR catalyst is a bottom layer on a substrate, with a second layer comprising the blend, partially covering the third SCR catalyst, and a third layer, comprising a second SCR, positioned over the second layer and covering all of the blend layer.
Fig. 7 depicts a configuration in which a third SCR catalyst is a bottom layer on a substrate, with a second layer comprising the blend, partially, but not completely, covering the third SCR catalyst, and a third layer, comprising a second SCR, positioned over the second layer and partially, but not completely, covering all of the blend layer.
Figure 8 depicts a configuration in which there is a single layer comprising the blend (not according to the invention).
Figures 9-11 depict configurations not according to the invention in which platinum on a support with low ammonia storage is present in a layer and the layer does not comprise a blend of platinum on a siliceous support within a first SCR catalyst. The portion of the catalyst comprising a blend of platinum on a support with low ammonia storage with a first SCR catalyst is labeled as "Supported Pt" in these figures.

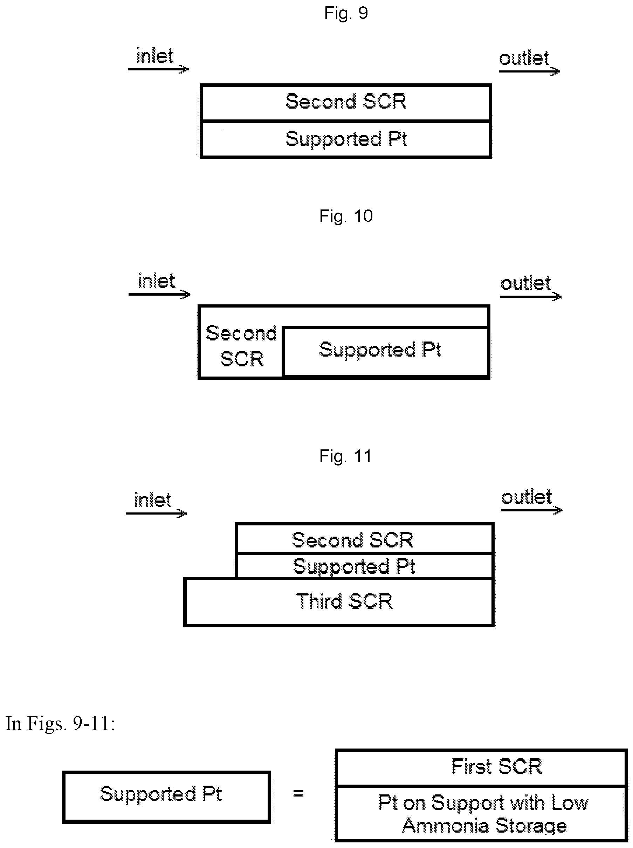

Fig. 9 depicts a configuration in which the second SCR is positioned in the exhaust gas flow over the layer of supported platinum and the second SCR covers the entire layer of supported platinum.
Fig. 10 depicts a configuration in which the second SCR is positioned in the exhaust gas flow before the blend and the second SCR covers the entire layer of supported platinum.
Fig. 11 depicts a configuration in which a third SCR catalyst is in a bottom layer on a substrate, with a second layer comprising the layer of supported platinum, partially covering the third SCR catalyst, and a third layer, comprising a second SCR, positioned over the second layer and covering the entire layer of supported platinum.

### DETAILED DESCRIPTION OF THE INVENTION

As used in this specification and the appended claims, the singular forms "a", "an" and "the" include plural referents unless the context clearly indicates otherwise. Thus, for example, reference to "a catalyst" includes a mixture of two or more catalysts, and the like.

As used herein, the term "ammonia slip", means the amount of unreacted ammonia that passes through the SCR catalyst.

The term "support" means the material to which a catalyst is fixed.

The term "a support with low ammonia storage" means a support that stores less than 0.001 mmol NH₃ per m³ of support. The support with low ammonia storage is preferably a molecular sieve or zeolite having a framework type selected from the group consisting of AEI, ANA, ATS, BEA, CDO, CFI, CHA, CON, DDR, ERI, FAU, FER, GON, IFR, IFW, IFY, IHW, IMF, IRN, IRY, ISV, ITE, ITG, ITN, ITR, ITW, IWR, IWS, IWV, IWW, JOZ, LTA, LTF, MEL, MEP, MFI, MRE, MSE, MTF, MTN, MTT, MTW, MVY, MWW, NON, NSI, RRO, RSN, RTE, RTH, RUT, RWR, SEW, SFE, SFF, SFG, SFH, SFN, SFS, SFV, SGT, SOD, SSF, SSO, SSY, STF, STO, STT, SVR, SVV, TON, TUN, UOS, UOV, UTL, UWY, VET, VNI. More preferably, the support with low ammonia storage is a molecular sieve or zeolite having a framework type selected from the group consisting of BEA, CDO, CON, FAU, MEL, MFI and MWW, even more preferably the framework type is selected from the group consisting of BEA and MFI.

The term "calcine", or "calcination", means heating the material in air or oxygen. This definition is consistent with the IUPAC definition of calcination. (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi:10.1351/ goldbook.) Calcination is performed to decompose a metal salt and promote the exchange of metal ions within the catalyst and also to adhere the catalyst to a substrate. The temperatures used in calcination depend upon the components in the material to be calcined and generally are between about 400 °C to about 900 °C for approximately 1 to 8 hours. In some cases, calcination can be performed up to a temperature of about 1200 °C. In applications involving the processes described herein, calcinations are generally performed at temperatures from about 400 °C to about 700 °C for approximately 1 to 8 hours, preferably at temperatures from about 400 °C to about 650 °C for approximately 1 to 4 hours.

The term "about" means approximately and refers to a range that is optionally ± 25%, preferably ± 10%, more preferably, ± 5%, or most preferably ± 1% of the value with which the term is associated.

When a range, or ranges, for various numerical elements are provided, the range, or ranges, can include the values, unless otherwise specified.

The term "N₂ selectivity" means the percent conversion of ammonia into nitrogen.

In the first aspect of the invention, a catalyst comprises a combination of platinum on a support with low ammonia storage and a first SCR catalyst. The combination of platinum on a support with low ammonia storage and a first SCR catalyst is a blend of platinum on a support with low ammonia storage with a first SCR catalyst. The support with low ammonia storage is a siliceous support. The siliceous support consists of a silica or a zeolite with silica-to-alumina ratio of ≥ 500, preferably ≥ 750, and most preferably ≥ 1000. In each aspect of the invention, the first SCR catalyst a Cu-SCR catalyst comprising copper and a molecular sieve or a Fe-SCR catalyst comprising iron and a molecular sieve, preferably a Cu-SCR catalyst.

The ratio of the amount of first SCR catalyst to the amount of platinum on a support with low ammonia storage in the blend can be in the range of 0.1 to 300:1, inclusive, preferably from 3:1 to 300:1, inclusive, more preferably 7:1 to 100:1, inclusive, even more preferably in the range of 10:1 to 50:1, inclusive, based on the weight of these components.

The term "active component loading" refers to the weight of the support of platinum + the weight of platinum + the weight of the first SCR catalyst in the blend. Platinum can be present in the catalyst in an active component loading from about 0.01 to about 0.3 wt.%, inclusive, preferably, from about 0.03-0.2 wt.%, inclusive, more preferably from about 0.05-0.17 wt.%, inclusive, most preferably, from about 0.07-0.15 wt.%, inclusive.

### SCR Catalysts

In various embodiments, the compositions can comprise one, two or three SCR catalysts. The first SCR catalyst, which is always present in the compositions, is present in a blend with Pt on a support with low ammonia storage. The first SCR catalyst is a Cu-SCR catalyst or a Fe-SCR catalyst, preferably a Cu-SCR catalyst. The Cu-SCR catalyst comprises copper and a molecular sieve. The Fe-SCR catalyst comprises iron and a molecular sieve. Molecular sieves are further described below. The molecular sieve can be an aluminosilicate, an aluminophosphate (AlPO), a silico-aluminophosphate (SAPO), or mixtures thereof. The copper or iron can be located within the framework of the molecular sieve and/or in extra-framework (exchangeable) sites within the molecular sieve.

The second and third SCR catalysts can be the same or different. The second and third SCR catalyst can be a base metal, an oxide of a base metal, a noble metal, a molecular sieve, a metal exchanged molecular sieve or a mixture thereof. The base metal can be selected from the group consisting of vanadium (V), molybdenum (Mo), tungsten (W), chromium (Cr), cerium (Ce), manganese (Mn), iron (Fe), cobalt (Co), nickel (Ni), and copper (Cu), and mixtures thereof. SCR compositions consisting of vanadium supported on a refractory metal oxide such as alumina, silica, zirconia, titania, ceria and combinations thereof are well known and widely used commercially in mobile applications. Typical compositions are described in U.S. Pat. Nos. 4,010,238 and 4,085,193, the entire contents of which are incorporated herein by reference. Compositions used commercially, especially in mobile applications, comprise TiO₂ on to which WO₃ and V₂O₅ have been dispersed at concentrations ranging from 5 to 20 wt. % and 0.5 to 6 wt. %, respectively. The noble metal can be platinum (Pt), palladium (Pd), gold (Au) silver (Ag), ruthenium (Ru) or rhodium (Rh), or a mixture thereof. The second SCR catalyst can comprise promoted Ce-Zr or MnO₂. These catalysts may contain other inorganic materials such as SiO₂ and ZrO₂ acting as binders and promoters.

When the SCR catalyst is a base metal, the catalyst article can further comprise at least one base metal promoter. As used herein, a "promoter" is understood to mean a substance that when added into a catalyst, increases the activity of the catalyst. The base metal promoter can be in the form of a metal, an oxide of the metal, or a mixture thereof. The at least one base metal catalyst promoter may be selected from neodymium (Nd), barium (Ba), cerium (Ce), lanthanum (La), praseodymium (Pr), magnesium (Mg), calcium (Ca), manganese (Mn), zinc (Zn), niobium (Nb), zirconium (Zr), molybdenum (Mo), tin (Sn), tantalum (Ta), strontium (Sr) and oxides thereof. The at least one base metal catalyst promoter can preferably be MnO₂, Mn₂O₃, Fe₂O₃, SnO₂, CuO, CoO, CeO₂ and mixtures thereof. The at least one base metal catalyst promoter may be added to the catalyst in the form of a salt in an aqueous solution, such as a nitrate or an acetate. The at least one base metal catalyst promoter and at least one base metal catalyst, e.g., copper, may be impregnated from an aqueous solution onto the oxide support material(s), may be added into a washcoat comprising the oxide support material(s), or may be impregnated into a support previously coated with the washcoat.

The SCR catalyst can comprise a molecular sieve or a metal exchanged molecular sieve. As is used herein "molecular sieve" is understood to mean a metastable material containing tiny pores of a precise and uniform size that may be used as an adsorbent for gases or liquids. The molecules which are small enough to pass through the pores are adsorbed while the larger molecules are not. The molecular sieve can be a zeolitic molecular sieve, a non-zeolitic molecular sieve, or a mixture thereof.

A zeolitic molecular sieve is a microporous aluminosilicate having any one of the framework structures listed in the Database of Zeolite Structures published by the International Zeolite Association (IZA). The framework structures include, but are not limited to those of the CHA, FAU, BEA, MFI, MOR types. Non-limiting examples of zeolites having these structures include chabazite, faujasite, zeolite Y, ultrastable zeolite Y, beta zeolite, mordenite, silicalite, zeolite X, and ZSM-5. Aluminosilicate zeolites can have a silica/alumina molar ratio (SAR) defined as SiO₂/Al₂O₃) from at least about 5, preferably at least about 20, with useful ranges of from about 10 to 200.

Any of the SCR catalysts can comprise a small pore, a medium pore or a large pore molecular sieve, or a mixture thereof. A "small pore molecular sieve" is a molecular sieve containing a maximum ring size of 8 tetrahedral atoms. A "medium pore molecular sieve" is a molecular sieve containing a maximum ring size of 10 tetrahedral atoms. A "large pore molecular sieve" is a molecular sieve having a maximum ring size of 12 tetrahedral atoms. The second and/or third SCR catalysts can comprise a small pore molecular sieve selected from the group consisting of aluminosilicate molecular sieves, metal-substituted aluminosilicate molecular sieves, aluminophosphate (AlPO) molecular sieves, metal-substituted aluminophosphate (MeAlPO) molecular sieves, silico-aluminophosphate (SAPO) molecular sieves, and metal substituted silico-aluminophosphate (MeAPSO) molecular sieves, and mixtures thereof.

Any of the SCR catalysts can comprise a small pore molecular sieve selected from the group of Framework Types consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SFW, SIV, THO, TSC, UEI, UFI, VNI, YUG, and ZON, and mixtures and/or intergrowths thereof. Preferably the small pore molecular sieve is selected from the group of Framework Types consisting of CHA, LEV, AEI, AFX, ERI, SFW, KFI, DDR and ITE.

Any of the SCR catalysts can comprise a medium pore molecular sieve selected from the group of Framework Types consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, -SVR, SZR, TER, TON, TUN, UOS, VSV, WEI, and WEN, and mixtures and/or intergrowths thereof. Preferably, the medium pore molecular sieve selected from the group of Framework Types consisting of MFI, FER and STT.

Any of the SCR catalysts can comprise a large pore molecular sieve selected from the group of Framework Types consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, and mixtures and/or intergrowths thereof. Preferably, the large pore molecular sieve is selected from the group of Framework Types consisting of MOR, OFF and BEA.

The molecular sieves in the Cu-SCR and Fe-SCR catalysts are preferably selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON, BEA, MFI and FER and mixtures and/or intergrowths thereof. More preferably, the molecular sieves in the Cu-SCR and Fe-SCR are selected from the group consisting of AEI, AFX, CHA, DDR, ERI, ITE, KFI, LEV, SFW, BEA, MFI and FER, and mixtures and/or intergrowths thereof.

A metal exchanged molecular sieve can have at least one metal from one of the groups VB, VIB, VIIB, VIIIB, IB, or IIB of the periodic table deposited onto extra-framework sites on the external surface or within the channels, cavities, or cages of the molecular sieves. Metals may be in one of several forms, including, but not limited to, zero valent metal atoms or clusters, isolated cations, mononuclear or polynuclear oxycations, or as extended metal oxides. Preferably, the metals can be iron, copper, and mixtures or combinations thereof.

The metal can be combined with the zeolite using a mixture or a solution of the metal precursor in a suitable solvent. The term "metal precursor" means any compound or complex that can be dispersed on the zeolite to give a catalytically-active metal component. Preferably the solvent is water due to both economics and environmental aspects of using other solvents. When copper, a preferred metal is used, suitable complexes or compounds include, but are not limited to, anhydrous and hydrated copper sulfate, copper nitrate, copper acetate, copper acetylacetonate, copper oxide, copper hydroxide, and salts of copper ammines (e.g. [Cu(NH₃)₄]²⁺). This invention is not restricted to metal precursors of a particular type, composition, or purity. The molecular sieve can be added to the solution of the metal component to form a suspension, which is then allowed to react so that the metal component is distributed on the zeolite. The metal can be distributed in the pore channels as well as on the outer surface of the molecular sieve. The metal can be distributed in ionic form or as a metal oxide. For example, copper may be distributed as copper (II) ions, copper (I) ions, or as copper oxide. The molecular sieve containing the metal can be separated from the liquid phase of the suspension, washed, and dried. The resulting metal-containing molecular sieve can then be calcined to fix the metal in the molecular sieve. Preferably, the second and third catalysts comprise a Cu-SCR catalyst comprising copper and a molecular sieve, an Fe-SCR catalyst comprising iron and a molecular sieve, a vanadium based catalyst, a promoted Ce-Zr or a promoted MnO₂.

A metal exchanged molecular sieve can contain in the range of about 0.10% and about 10% by weight of a group VB, VIB, VIIB, VIIIB, IB, or IIB metal located on extra framework sites on the external surface or within the channels, cavities, or cages of the molecular sieve. Preferably, the extra framework metal can be present in an amount of in the range of about 0.2% and about 5% by weight.

The metal exchanged molecular sieve can be a copper (Cu) or iron (Fe) supported molecular sieve having from about 0.1 to about 20.0 wt. % copper or iron of the total weight of the catalyst. More preferably copper or iron is present from about 0.5 wt. % to about 15 wt. % of the total weight of the catalyst. Most preferably copper or iron is present from about 1 wt. % to about 9 wt. % of the total weight of the catalyst.

The compositions can comprise one or more additional metals combined with the Pt. These one or more additional metals can be gold (Au), iridium (Ir), palladium (Pd), rhodium (Rh), ruthenium (Ru) or silver (Ag). These metals can be present at from about 0.1 wt. % to about 20 wt. %, inclusive, preferably from about 0.3 wt. % to about 10 wt. %, inclusive.

In the first aspect of the invention, the blend of platinum on a support with low ammonia storage with a first SCR catalyst can further comprise at least one of palladium (Pd), gold (Au) silver (Ag), ruthenium (Ru) or rhodium (Rh).

In the first aspect of the invention, the bottom layer comprising platinum on a support with low ammonia storage can further comprise at least one of palladium (Pd), gold (Au) silver (Ag), ruthenium (Ru) or rhodium (Rh). The bottom layer can also contain a mixed oxide catalyst having ammonia storage. The mixed oxide catalyst is preferably promoted CeZr or MnO₂.

The catalysts described herein can be used in the SCR treatment of exhaust gases from various engines. One of the properties of a catalyst comprising a blend of platinum on a support with low ammonia storage with a first SCR catalyst, where the first SCR catalyst is a Cu-SCR or Fe-SCR catalyst, is that it can provide an improvement in N₂ yield from ammonia at a temperature from about 250 °C to about 350 °C compared to a catalyst comprising a comparable formulation in which the first SCR catalyst is present as a first layer and platinum is supported on a layer that stores ammonia is present in a second layer and gas comprising NH₃ passes through the first layer before passing through the second layer. Another property of a catalyst comprising a blend of platinum on a support with low ammonia storage with a first SCR catalyst, where the first SCR catalyst is a Cu-SCR catalyst or an Fe-SCR catalyst, is that it can provide reduced N₂O formation from NH₃ compared to a catalyst comprising a comparable formulation in which the first SCR catalyst is present as a first layer and platinum supported on a support that stores ammonia is present in a second layer and gas comprising NH₃ passes through the first layer before passing through the second layer.

In another aspect of the invention, a method of making a catalyst comprising a blend of platinum on support with low ammonia storage and a first SCR catalyst as claimed herein comprises blending a catalyst comprising platinum on a support with low ammonia storage with the first SCR catalyst, where the first SCR catalyst is a Cu-SCR catalyst or a Fe-SCR catalyst. One of ordinary skill in the art would be aware of ways that these materials can be blended. For example, platinum can be prepared on a support with low ammonia storage by impregnating a support with low ammonia storage with a solution of a platinum salt, preferably platinum nitrate, using a conventional incipient wetness technique. After impregnation, the support can be dried, preferably at about 100 °C, in air in a static oven for about 5 hours and then calcined in air at about 500 °C in a static oven for 2 hours. Platinum on a support with low ammonia storage can be mixed with the first SCR by a variety of techniques not to those of ordinary skill in the art. For example, a mixture of platinum on a support with low ammonia storage can be blended with the first SCR catalyst in a washcoat by slurrying a powder of platinum on support that does not support ammonia with a powder of an SCR catalyst using an industrial mixer. A binder, such as alumina, can be added. The slurry can then be applied as a washcoat onto a substrate such as a honeycomb substrate.

In one aspect of the invention, various configurations of catalysts comprising a blend of platinum on a support with low ammonia storage with a first SCR catalyst can be prepared. The portion of the catalyst comprising a blend of platinum on a support with low ammonia storage within a first SCR catalyst is labeled as "blend" in the figures described below.

In a first configuration, a catalyst can comprise a first layer comprising a blend of platinum on a support with low ammonia storage with a first SCR catalyst, where the first SCR catalyst is a Cu-SCR catalyst or an Fe-SCR catalyst and a second layer comprising a second SCR catalyst, where the second layer is located in a layer over the first layer and the second layer covers all of the first layer. Fig. 1 depicts a configuration in which the second SCR is positioned in the exhaust gas flow over the blend and the second SCR covers the entire blend.

In a second configuration, a catalyst can comprise a first layer comprising a blend of platinum on a support with low ammonia storage with a first SCR catalyst, where the first SCR catalyst is a Cu-SCR catalyst or an Fe-SCR catalyst and a second layer comprising a second SCR catalyst, where a first portion of the second SCR catalyst is located upstream of the first layer and a second portion of the second SCR catalyst is present in the second layer, where the second layer covers all of the first layer. Fig. 2 depicts a configuration in which the second SCR is positioned in the exhaust gas flow before the blend and the second SCR covers the entire blend.

In a third configuration, a catalyst can comprise a first layer comprising a blend of platinum on a support with low ammonia storage with a first SCR catalyst, where the first SCR catalyst is a Cu-SCR catalyst or an Fe-SCR catalyst and a second layer comprising a second SCR catalyst, where a first portion of the second SCR catalyst is located upstream of the first layer and a second portion of the second SCR catalyst is present in the second layer, where the second layer covers a portion of, but not all of, the first layer. The second SCR catalyst can overlap the blend of platinum on a support with low ammonia storage and a first SCR catalyst by an amount from about 10% to 95%, inclusive, preferably 50% to 95%, inclusive. Fig. 3 depicts a configuration in which the second SCR is positioned in the exhaust gas flow before the blend and the second SCR covers a portion, but not all, of the blend. In Figure 3, the second SCR covers about 40% of the blend.

In a fourth configuration, a catalyst can comprise a first layer comprising a blend of platinum on a support with low ammonia storage with a first SCR catalyst, where the first SCR catalyst is a Cu-SCR catalyst or an Fe-SCR catalyst and a second layer comprising a second SCR catalyst, where a first portion of the second SCR catalyst is located downstream of the first layer and a second portion of the second SCR catalyst is present in the second layer, where the second layer covers all of the first layer. Fig. 4 depicts a configuration in which the second SCR covers the entire blend and a portion of the second SCR is positioned in the exhaust gas flow after the blend.

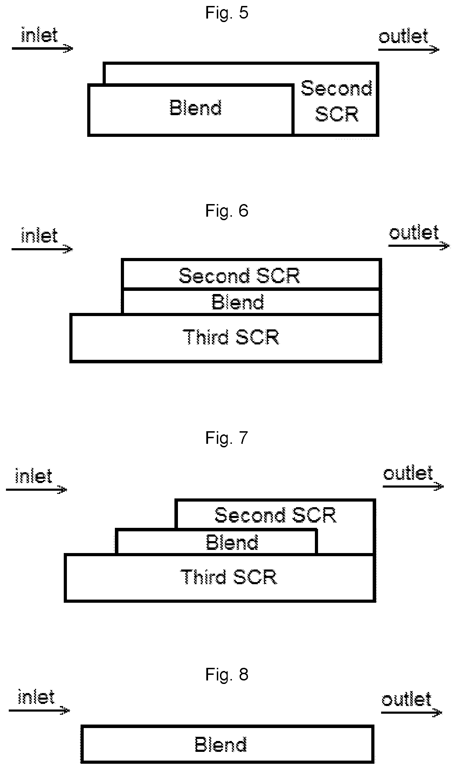

In a fifth configuration, a catalyst can comprise a first layer comprising a blend of platinum on a support with low ammonia storage with a first SCR catalyst, where the first SCR catalyst is a Cu-SCR catalyst or an Fe-SCR catalyst and a second layer comprising a second SCR catalyst, where a first portion of the second SCR catalyst is located downstream of the first layer and a second portion of the second SCR catalyst is present in the second layer, where the second layer covers a portion of, but not all of, the first layer. The second SCR catalyst can overlap the blend of platinum on a support with low ammonia storage and a first SCR catalyst by an amount from about 10% to 95%, inclusive, preferably 50% to 95% inclusive. Fig. 5 depicts a configuration in which the second SCR covers a portion of, but not the entire blend, and a portion of the second SCR is positioned in the exhaust gas flow after the blend. In Figure 5, the second SCR covers about 95% of the blend.

In a sixth configuration, a catalyst can comprise a first layer comprising a third SCR catalyst. The first layer is partially, but not completely, covered by a blend of platinum on a support with low ammonia storage with a first SCR catalyst, where the first SCR catalyst is a Cu-SCR catalyst or a Fe-SCR catalyst. The blend can cover the third SCR catalyst is an amount from about 10% to 95%, inclusive, preferably 50% to 95%, inclusive. The second layer is covered by a third layer comprising a second SCR catalyst, where the third layer covers the entire second layer. Fig. 6 depicts a configuration in which a third SCR catalyst is a bottom layer on a substrate, with a second layer comprising the blend, partially covering the third SCR catalyst, and a third layer, comprising a second SCR, positioned over the second layer and covering all of the blend layer.

In a seventh configuration, a catalyst can comprise a first layer comprising a third SCR catalyst. The first layer is partially, but not completely, covered by a blend of platinum on a support with low ammonia storage with a first SCR catalyst, where the first SCR catalyst is a Cu-SCR catalyst or a Fe-SCR catalyst. The blend can cover the third SCR catalyst is an amount from about 10% to 95%, inclusive, preferably 50% to 95%. The second layer is covered by a third layer comprising a second SCR catalyst, where the third layer partially, but not completely, covers the second layer and a portion of the second SCR catalyst is also located downstream of the blend and also covers a portion of the third SCR catalyst downstream from the second layer. The second SCR catalyst can cover the third SCR catalyst is an amount from about 10% to 95%, inclusive, preferably 50% to 95%, inclusive. Fig. 7 depicts a configuration in which a third SCR catalyst is a bottom layer on a substrate, with a second layer comprising the blend, partially, but not completely, covering the third SCR catalyst, and a third layer, comprising a second SCR, positioned over the second layer and partially, but not completely, covering all of the blend layer. The second layer covers about 60 % of the first layer and the layer with the second SCR covers about 20% of the first layer. The term "cover" means the portion of a layer that is in direct contact with a different layer.

In an eighth configuration, not according to the invention, a catalyst can comprise a single layer comprising platinum on a support with low ammonia storage. Fig. 8 depicts a configuration in which a single layer comprising platinum on a support with low ammonia storage is positioned in the exhaust gas flow.

In a ninth configuration, not according to the invention, a catalyst can comprise a first layer comprising platinum on a support with low ammonia storage with a first SCR catalyst and a second layer comprising a second SCR catalyst, where the second layer is located in a layer over the first layer and the second layer covers all of the first layer. Fig. 9 depicts a configuration in which the second SCR is positioned in the exhaust gas flow over the supported platinum and the second SCR covers all of the supported platinum.

In a tenth configuration, a catalyst can comprise a first layer comprising platinum on a support with low ammonia storage and a second layer comprising a second SCR catalyst, where a first portion of the second SCR catalyst is located upstream of the first layer and a second portion of the second SCR catalyst is present in the second layer, where the second layer covers all of the first layer. Fig. 10 depicts a configuration in which the second SCR is positioned in the exhaust gas flow before the blend and the second SCR covers all of the supported platinum.

In an eleventh configuration, a catalyst can comprise a first layer comprising a third SCR catalyst. The first layer is partially, but not completely, covered by a second layer comprising platinum on a support with low ammonia storage. The layer comprising supported platinum can cover the third SCR catalyst is an amount from about 10% to 95%, inclusive, preferably 50% to 95%, inclusive. The second layer comprising supported platinum is covered by a third layer comprising a second SCR catalyst, where the third layer covers the entire second layer. Fig. 11 depicts a configuration in which a third SCR catalyst is a bottom layer on a substrate, with a second layer comprising the supported Pt, partially covering the third SCR catalyst, and a third layer, comprising a second SCR, positioned over the second layer and covering all of the supported platinum.

In one aspect of the invention, an article comprises: (1) a catalyst of the first aspect of the invention, (2) a substrate upon which the catalysts are located, (3) an inlet and (4) an outlet. The catalyst can have one of the configurations described above.

The substrate for the catalyst may be any material typically used for preparing automotive catalysts that comprises a flow-through or filter structure, such as a honeycomb structure, an extruded support, a metallic substrate, or a SCRF. Preferably the substrate has a plurality of fine, parallel gas flow passages extending from an inlet to an outlet face of the substrate, such that passages are open to fluid flow. Such monolithic carriers may contain up to about 700 or more flow passages (or "cells") per square inch of cross section, although far fewer may be used. For example, the carrier may have from about 7 to 600, more usually from about 100 to 400, cells per square inch ("cpsi"). The passages, which are essentially straight paths from their fluid inlet to their fluid outlet, are defined by walls onto which the SCR catalyst is coated as a "washcoat" so that the gases flowing through the passages contact the catalytic material. The flow passages of the monolithic substrate are thin-walled channels which can be of any suitable cross-sectional shape such as trapezoidal, rectangular, square, triangular, sinusoidal, hexagonal, oval, circular, etc. The invention is not limited to a particular substrate type, material, or geometry.

Ceramic substrates may be made of any suitable refractory material, such as cordierite, cordierite-α alumina, α-alumina, silicon carbide, silicon nitride, zirconia, mullite, spodumene, alumina-silica magnesia, zirconium silicate, sillimanite, magnesium silicates, zircon, petalite, aluminosilicates and mixtures thereof.

Wall flow substrates may also be formed of ceramic fiber composite materials, such as those formed from cordierite and silicon carbide. Such materials are able to withstand the environment, particularly high temperatures, encountered in treating the exhaust streams.

The substrates can be a high porosity substrate. The term "high porosity substrate" refers to a substrate having a porosity of between about 40% and about 80%. The high porosity substrate can have a porosity preferably of at least about 45%, more preferably of at least about 50%. The high porosity substrate can have a porosity preferably of less than about 75%, more preferably of less than about 70%. The term porosity, as used herein, refers to the total porosity, preferably as measured with mercury porosimetry.

Preferably, the substrate can be cordierite, a high porosity cordierite, a metallic substrate, an extruded SCR, a wall flow filter, a filter or an SCRF.

A washcoat comprising a blend of platinum on a siliceous support and a first SCR catalyst, where the first SCR catalyst is a Cu-SCR catalyst or an Fe-SCR catalyst, can be applied to the inlet side of the substrate using a method known in the art. After application of the washcoat, the composition can be dried and calcined. The second SCR can be applied in a separate washcoat to a calcined article having the bottom layer, as described above. After the second washcoat is applied, it can be dried and calcined as performed for the first layer.

The substrate with the platinum containing layer can be dried and calcined at a temperature within the range of 300°C to 1200°C, preferably 400°C to 700 °C, and more preferably 450°C to 650 °C. The calcination is preferably done under dry conditions, but it can also be performed hydrothermally, i.e., in the presence of some moisture content. Calcination can be performed for a time of between about 30 minutes and about 4 hours, preferably between about 30 minutes and about 2 hours, more preferably between about 30 minutes and about 1 hour.

An exhaust system can comprise a catalyst have one of the eleven configurations described above and a means for forming NH₃ in the exhaust gas, where NH₃ is formed the exhaust gas before the exhaust gas comes in contact with the catalyst.

An exhaust system can comprise: (1) a catalyst comprising a blend of platinum on a support with low ammonia storage and a first SCR catalyst, where the first SCR catalyst is a Cu-SCR catalyst or an Fe-SCR catalyst, (2) a second SCR catalyst, where the second SCR catalyst is located adjacent to the blend of platinum on a support with low ammonia storage and the first SCR catalyst and at least partially overlaps the blend of platinum on a support with low ammonia storage and the first SCR catalyst and (3) a means for forming NH₃ in the exhaust gas where NH₃ is formed the exhaust gas before the exhaust gas comes in contact with the catalyst. An exhaust system can comprise (1) a catalyst comprising a blend of platinum on a support with low ammonia storage and a first SCR catalyst, where the first SCR catalyst is a Cu-SCR catalyst or an Fe-SCR catalyst, (2) a second SCR catalyst, where the second SCR catalyst is located adjacent to the blend of platinum on a support with low ammonia storage and a first SCR catalyst and at least partially overlaps the blend of platinum on a support with low ammonia storage and a first SCR catalyst, (3) a third SCR catalyst, where the third SCR catalyst is located adjacent to the blend of platinum on a support with low ammonia storage and a first SCR catalyst and the blend of platinum on a support with low ammonia storage and the first SCR catalyst at least partially overlaps the third SCR catalyst and (4) a means for forming NH₃ in the exhaust gas where NH₃ is formed the exhaust gas before the exhaust gas comes in contact with the catalyst.

In another aspect of the invention, a method of improving the N₂ yield from ammonia in an exhaust gas at a temperature from about 250 °C to about 350 °C comprises contacting an exhaust gas comprising ammonia with a catalyst of the first aspect of the invention. The improvement in yield can be about 10% to about 20% at about 250 °C compared to a catalyst comprising a comparable formulation in which the first SCR catalyst is present as a first layer and the supported platinum is present in a second layer and gas comprising NH₃ passes through the first layer before passing through the second layer.

In another aspect of the invention, a method of improving the N₂ yield from ammonia in an exhaust gas at a temperature from about 250 °C to about 350 °C comprises contacting an exhaust gas comprising ammonia with a catalyst comprising (1) a blend of platinum on a support with low ammonia storage with a first SCR catalyst, where the first SCR catalyst is a Cu-SCR catalyst or a Fe-SCR catalyst, and the first SCR catalyst is present as a blend with the platinum, and (2) a second SCR catalyst, where the second SCR catalyst is located adjacent to the blend of platinum on a support with low ammonia storage and the first SCR catalyst and at least partially overlaps the blend of platinum on a support with low ammonia storage and the first SCR catalyst. The improvement in yield can be about 10% to about 20% at about 250 °C compared to a catalyst comprising a comparable formulation in which the first SCR catalyst is present as a first layer and the supported platinum is present in a second layer and gas comprising NH₃ passes through the first layer before passing through the second layer.

In another aspect of the invention, a method of improving the N₂ yield from ammonia in an exhaust gas at a temperature from about 250 °C to about 350 °C comprises contacting an exhaust gas comprising ammonia with a catalyst comprising (1) a blend of platinum on a support with low ammonia storage with a first SCR catalyst, where the first SCR catalyst is a Cu-SCR catalyst or a Fe-SCR catalyst, and the first SCR catalyst is present as a blend with the platinum, (2) a second SCR catalyst, where the second SCR catalyst is located adjacent to the blend of platinum on a support with low ammonia storage and the first SCR catalyst and at least partially overlaps the blend of platinum on a support with low ammonia storage and the first SCR catalyst, and (3) a third SCR catalyst, where the third SCR catalyst is located adjacent to the blend of platinum on a support with low ammonia storage and a first SCR catalyst and the blend of platinum on a support with low ammonia storage and the first SCR catalyst at least partially overlaps the third SCR catalyst. The improvement in yield can be about 10% to about 20% at about 250 °C compared to a catalyst comprising a comparable formulation in which the first SCR catalyst is present as a first layer and the supported platinum is present in a second layer and gas comprising NH₃ passes through the first layer before passing through the second layer.

In another aspect of the invention, a method of reducing N₂O formation from NH₃ in an exhaust gas comprises contacting an exhaust gas comprising ammonia with a catalyst comprising (1) a blend of platinum on a support with low ammonia storage with a first SCR catalyst, where the first SCR catalyst is a Cu-SCR catalyst or a Fe-SCR catalyst, is present as a blend with the platinum and (2) a second SCR catalyst, where the second SCR catalyst is located adjacent to the blend of platinum on a support with low ammonia storage and the first SCR catalyst and at least partially overlaps the blend of platinum on a support with low ammonia storage and the first SCR catalyst. The reduction in N₂O yield can be about 40% to about 70% at about 250 °C compared to a catalyst comprising a comparable formulation in which the first SCR catalyst is present as a first layer and the supported platinum is present in a second layer and gas comprising NH₃ passes through the first layer before passing through the second layer.

In another aspect of the invention, a method of reducing N₂O formation from NH₃ in an exhaust gas comprises contacting an exhaust gas comprising ammonia with a catalyst comprising (1) a blend of platinum on a support with low ammonia storage with a first SCR catalyst, where the first SCR catalyst is a Cu-SCR catalyst or a Fe-SCR catalyst, and the first SCR catalyst is present as a blend with the platinum, (2) a second SCR catalyst, where the second SCR catalyst is located adjacent to the blend of platinum on a support with low ammonia storage and the first SCR catalyst and at least partially overlaps the blend of platinum on a support with low ammonia storage and the first SCR catalyst, and (3) a third SCR catalyst, where the third SCR catalyst is located adjacent to the blend of platinum on a support with low ammonia storage and the first SCR catalyst and the blend of platinum on a support with low ammonia storage and the first SCR catalyst at least partially overlaps the third SCR catalyst. The reduction in N₂O yield can be about 40% to about 70% at about 250 °C compared to a catalyst comprising a comparable formulation in which the first SCR catalyst is present as a first layer and the supported platinum is present in a second layer and gas comprising NH₃ passes through the first layer before passing through the second layer.

The following examples merely illustrate the invention; the skilled person will recognize many variations that are within the spirit of the invention and scope of the claims.

### EXAMPLES

### Example 1 - Bilayer blend of 1 wt. % Pt on MFI zeolite (SAR = 2100) with Cu-CHA in the bottom layer and Cu-CHA in the top layer with the full length of the Pt bottom layer covered by the Cu-CHA top layer.

A bottom layer comprising a washcoat comprising a blend of 1 wt. % Pt on a ZSM-5 (MFI framework with SAR = 2100) and a Cu-CHA (copper chabazite) was applied to a ceramic substrate. The washcoat was pulled down the substrate using a vacuum. The article was dried and calcined at about 500 °C for about 1 hour. The loading of Pt, the high SAR zeolite and the Cu-CHA on the article was 3 g/ft³, 0.18 g/in³, and 1.8 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 1. The configuration of Example 1 is shown in Fig. 1.

### Example 2 - Bilayer blend of 2 wt. % Pt on MFI zeolite (SAR = 2100) with Cu-CHA in the bottom layer and Cu-CHA in the top layer with the full length of the Pt bottom layer covered by the Cu-CHA top layer.

A bottom layer comprising a washcoat comprising a blend of 2 wt. % Pt on a ZSM-5 (MFI framework with SAR = 2100) and a Cu-CHA was applied to a ceramic substrate, then the washcoat was pulled down the substrate using a vacuum. The article was dried and calcined at about 500 °C for about 1 hour. The loading of Pt, the high SAR zeolite and the Cu-CHA on the article was 3 g/ft³, 0.09 g/in³, and 0.9 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 2. The configuration of Example 2 is shown in Fig. 1.

### Example 3 - Bilayer blend of 2 wt. % Pt on amorphous silica with Cu-CHA in the bottom layer and Cu-CHA in the top layer with the full length of the Pt bottom layer covered by the Cu-CHA top layer.

A bottom layer was applied to a ceramic substrate using a washcoat comprising a blend of 2 wt. % Pt on an amorphous silica and a Cu-CHA. The washcoat was applied to a ceramic substrate, and then the washcoat was pulled down the substrate using a vacuum. The article was dried and calcined at about 500 °C for about 1 hour. The loading of Pt, the high SAR zeolite and the Cu-CHA on the article was 3 g/ft³, 0.09 g/in³, and 0.9 g/in³, respectively.

A top layer was applied to the substrate coated with the bottom layer using a second washcoat comprising a Cu-CHA, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 3. The configuration of Example 3 is shown in Fig. 1.

### Example 4 - Bilayer blend of 1 wt. % Pt on alumina with Cu-CHA in the bottom layer and Cu-CHA in the top layer with the full length of the Pt bottom layer covered by the Cu-CHA (comparative)

A bottom layer comprising using a washcoat comprising a blend of 1 wt. % Pt on alumina and a Cu-CHA was applied to a ceramic substrate, and then the washcoat was pulled down the substrate using a vacuum. The article was dried and calcined at about 500 °C for about 1 hour. The loading of Pt, the high SAR zeolite and the Cu-CHA on the article was 3 g/ft³, 0.18 g/in³, and 1.8 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 4. The configuration of Example 4 is shown in Fig. 1.

### Example 5 - Bilayer blend of 2 wt. % Pt on titania with Cu-CHA in the bottom layer and Cu-CHA in the top layer with the full length of the Pt bottom layer covered by the Cu-CHA top layer (comparative)

A bottom layer comprising a washcoat comprising a blend of 2 wt. % Pt on a titania and a Cu-CHA was applied to a ceramic substrate, and then the washcoat was pulled down the substrate using a vacuum. The article was dried and calcined at about 500 °C for about 1 hour. The loading of Pt, the high SAR zeolite and the Cu-CHA on the article was 3 g/ft³, 0.09 g/in³, and 0.9 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 5. The configuration of Example 5 is shown in Fig. 1.

Examples 1-5 compare the NH₃ oxidation activity of fresh catalysts with similar blend configuration in the bottom layer and a fully covered Cu-CHA top layer where the blend comprises Pt on different -support materials: siliceous zeolite, silica, alumina and titania (Table 1). Examples 1-2 provided the highest NH₃ oxidation activity at 250°C, with conversions greater than 80%. In contrast, Examples 3-5 provided substantially lower NH₃ conversions at 250°C. These results suggest that Pt on a support with low ammonia storage, such as a siliceous support, (for example a zeolite or silica), is required to achieve satisfactory NH₃ oxidation activity.

**Table 1. Comparing steady state NH₃ oxidation activity or fresh catalysts under 200 ppm NH₃, 10 % O₂, 4.5 % H₂O, 4.5 % CO₂, balance N₂ at SV = 120,000 h⁻¹.**

| Example | 250 °C activity | | | | 450 °C activity | | | |
|---|---|---|---|---|---|---|---|---|
| | NH₃ conversion (%) | N₂ yield (%) | N₂O (ppm) | NOₓ (ppm) | NH₃ conversion (%) | N₂ yield (%) | N₂O (ppm) | NOₓ (ppm) |
| 1-fresh | 80.2 | 68.7 | 11.9 | 0.2 | 97.1 | 95.5 | 1.1 | 1.1 |
| 2-fresh | 81.6 | 70.0 | 11.8 | 0.4 | 97.0 | 95.2 | 1.3 | 1.2 |
| 3-fresh | 91.2 | 74.7 | 17.1 | 0.1 | 98.1 | 95.7 | 1.7 | 1.6 |
| 4-fresh | 15.4 | 13.7 | 1.7 | 0.0 | 96.5 | 94.8 | 1.3 | 1.0 |
| 5-fresh | 56.5 | 48.7 | 7.9 | 0.2 | 98.2 | 94.2 | 3.2 | 2.0 |

### Example 6 - Bilayer blend of 4 wt. % Pt on MFI zeolite (SAR = 40) with Cu-CHA in the bottom layer and Cu-CHA in the top layer with the full length of the Pt bottom layer covered by the Cu-CHA top layer (comparative)

A bottom layer comprising a washcoat comprising a blend of 4 wt. % Pt on a ZSM-5 (MFI framework with SAR = 40) and a Cu-CHA was applied to a ceramic substrate, then the washcoat was pulled down the substrate using a vacuum. The article was dried and calcined at about 500 °C for about 1 hour. The loading of Pt, the high SAR zeolite and the Cu-CHA on the article was 3 g/ft³, 0.045 g/in³, and 0.9 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 6. The configuration of Example 6 is shown in Fig. 1.

### Example 7 - Bilayer blend of 4 wt. % Pt on MFI zeolite (SAR = 850) with Cu-CHA in the bottom layer and Cu-CHA in the top layer with the full length of the Pt bottom layer covered by the Cu-CHA top layer.

A bottom layer comprising a washcoat comprising a blend of 4 wt. % Pt on a ZSM-5 (MFI framework with SAR = 850) and a Cu-CHA was applied to a ceramic substrate, then the washcoat was pulled down the substrate using a vacuum. The article was dried and calcined at about 500 °C for about 1 hour. The loading of Pt, the high SAR zeolite and the Cu-CHA on the article was 3 g/ft³, 0.045 g/in³, and 0.9 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 7. The configuration of Example 7 is shown in Fig. 1.

### Example 8 - Bilayer blend of 4 wt. % Pt on MFI zeolite (SAR = 2100) with Cu-CHA in the bottom layer and Cu-CHA in the top layer with the full length of the Pt bottom layer covered by the Cu-CHA top layer.

A bottom layer comprising a washcoat comprising a blend of 4 wt. % Pt on a ZSM-5 (MFI framework with SAR = 2100) and a Cu-CHA was applied to a ceramic substrate, then the washcoat was pulled down the substrate using a vacuum. The article was dried and calcined at about 500 °C for about 1 hour. The loading of Pt, the high SAR zeolite and the Cu-CHA on the article was 3 g/ft³, 0.045 g/in³, and 0.9 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 100% of the blend bottom layer covered by the Cu-CHA top layer. This material is Example 8. The configuration of Example 8 is shown in Fig. 1.

Examples 6-8 compare catalysts with a blended bottom layer and a fully covered top layer, where the blend comprises Pt supported on zeolites with different SAR values (Table 2). When fresh, all three catalysts in Examples 6-8 provided similar NH₃ conversions at 250°C, but the N₂O production at 250°C was highest in Example 6 (SAR = 40) and lowest in Example 8 (SAR = 2100). These results suggest that a highly siliceous zeolite (such as a zeolite with an SAR > 1000) is most preferable as a Pt support to achieve low N₂O formation and high hydrothermal durability.

**Table 2. Comparing steady state NH₃ oxidation activity of fresh catalysts under 200 ppm NH₃, 10 % O₂, 4.5 % H₂O, 4.5 % CO₂, balance N₂ at SV = 120,000 h⁻¹.**

| Example | 250 °C activity | | | | 450 °C activity | | | |
|---|---|---|---|---|---|---|---|---|
| | NH₃ conversion (%) | N₂ yield (%) | N₂O (ppm) | NOₓ (ppm) | NH₃ conversion (%) | N₂ yield (%) | N₂O (ppm) | NOₓ (ppm) |
| 6-fresh | 88.0 | 71.9 | 17.1 | 0.0 | 97.8 | 96.1 | 1.3 | 1.1 |
| 7-fresh | 88.7 | 76.4 | 13.0 | 0.0 | 97.3 | 95.4 | 1.4 | 1.2 |
| 8-fresh | 90.2 | 81.1 | 9.4 | 0.0 | 98.3 | 96.1 | 1.6 | 1.5 |

### Example 9 - Bi-Layer Formulation - Pt on Alumina with Cu-SCR top layer - Comparative Example

A bi-layer formulation having a Pt on alumina bottom layer and a SCR top layer was used as a comparative example.

A bottom layer comprising a washcoat comprising 0.3 wt. % Pt on alumina was applied to a ceramic substrate, then the washcoat was pulled down the substrate using a vacuum. The article was dried and calcined at about 500 °C for about 1 hour. The loading of Pt on the article was 3 g/ft³.

A top layer comprising a second washcoat comprising a Cu-CHA was applied to the substrate coated with the bottom layer, and then the washcoat was pulled down the substrate using a vacuum. The article was dried and calcined at about 500 °C for about 1 hour. The loading of Cu-CHA in the top layer was 1.8 g/in³. This material is Example 9. An aged sample was prepared by aging a sample of Example 9 for 50 hours at 620 °C in an atmosphere containing 10% H₂O. The configuration of Example 9 is shown in Fig. 8.

### Example 10: Pt on a MFI zeolite (SAR = 2100) only with Cu-SCR top layer

A single layer formulation of 0.3wt% Pt on a ZSM-5 (MFI framework with SAR = 2100) was used as a comparative example.

A catalytic article comprising a washcoat slurry comprising 0.3wt% platinum on a ZSM-5 (MFI framework with SAR = 2100) was applied to a ceramic substrate, then the washcoat was pulled down the substrate using a vacuum. The platinum load on the article was 3 g/ft³. The substrate was dried to remove moisture, and then calcined at about 500 °C for about 1 hour. This material is Example 10. An aged sample was prepared by aging a sample of Example 10 for 50 hours at 620 °C in an atmosphere containing 10% H₂O. The configuration of Example 10 is shown in Fig. 8.

### Example 11 - Single layer blend of 4 wt.-% Pt on MFI zeolite (SAR = 2100) with a Cu-CHA

A washcoat comprising a blend of 4 wt. % Pt on a ZSM-5 zeolite (SAR 1500) with a Cu-CHA was prepared. The washcoat was applied to the inlet side of a ceramic substrate, and then a vacuum was used to pull the washcoat down the substrate. The article was dried and calcined at about 500 °C for about 1 hour. The loading of Pt, ZSM-5 and Cu-CHA was 3 g/ft³, 0.045 /in³, and 0.9 g/in³, respectively. This material is Example 11. An aged sample was prepared by aging a sample of Example 11 for 50 hours at 620 °C in an atmosphere containing 10% H₂O. The configuration of Example 11 is shown in Fig. 9.

### Example 12 - Bilayer blend of 4 wt. % Pt on MFI zeolite (SAR = 2100) with Cu-CHA in the bottom layer and Cu-CHA in the top layer with 50% of the Pt bottom layer covered by the Cu-CHA top layer from inlet.

A bi-layer formulation comprising a blend of 4 wt. % Pt on a high SAR zeolite with Cu-CHA in the bottom layer and a 50% Cu-CHA SCR top layer was prepared as described below.

A bottom layer comprising a washcoat comprising a blend of 4 wt. % Pt on a ZSM-5 (MFI framework with SAR = 2100) and a Cu-CHA was applied to a ceramic substrate, then the washcoat was pulled down the substrate using a vacuum. The article was dried and calcined at about 500 °C for about 1 hour. The loading of Pt, the high SAR zeolite and the Cu-CHA on the article was 3 g/ft³, 0.045 g/in³, and 0.9 g/in³, respectively.

A top layer comprising a second washcoat comprising a Cu-CHA was applied to the substrate coated with the bottom layer, and then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 50% of the blend bottom layer covered by the Cu-CHA top layer from the inlet. This material is Example 12. An aged sample was prepared by aging a sample of Example 12 for 50 hours at 620 °C in an atmosphere containing 10% H₂O. The configuration of Example 12 is shown in Fig. 3.

### Example 13 - Bilayer blend of 4 wt. % Pt on MFI zeolite (SAR = 2100) with Cu-CHA in the bottom layer and Cu-CHA in the top layer with 90% of the Pt bottom layer covered by the Cu-CHA top layer from the outlet.

A bottom layer comprising a washcoat comprising a blend of 4 wt. % Pt on a ZSM-5 (MFI framework with SAR = 2100) and a Cu-CHA was applied to a ceramic substrate, then the washcoat was pulled down the substrate using a vacuum. The article was dried and calcined at about 500 °C for about 1 hour. The loading of Pt, the high SAR zeolite and the Cu-CHA on the article was 3 g/ft³, 0.045 g/in³, and 0.9 g/in³, respectively.

A top layer comprising a second washcoat comprising a Cu-CHA, was applied to the substrate coated with the bottom layer then the washcoat was pulled down the substrate to a distance of about 50% of the length of the substrate using a vacuum. The article was dried and calcined at about 500 °C for about 1 hour. The loading of Cu-CHA in the top layer was 1.8 g/in³. The article was cut at an appropriate location along the length of the article to form a new smaller article having 90% of the blend bottom layer covered by the Cu-CHA top layer from the outlet. This material is Example 12. An aged sample was prepared by aging a sample of Example 12 for 50 hours at 620 °C in an atmosphere containing 10% H₂O. The configuration of Example 13 is shown in Fig. 10.

**Table 3. Comparing fresh or 620°C/10%H₂O/50h aged catalysts' steady state NH₃ oxidation activity under 200 ppm NH₃, 10 % O₂, 4.5 % H₂O, 4.5 % CO₂, balance N₂ at SV = 120,000 h⁻¹.**

| Example | 250 °C activity | | | | 450 °C activity | | | |
|---|---|---|---|---|---|---|---|---|
| | NH₃ conversion (%) | N₂ yield (%) | N₂O (ppm) | NOₓ (ppm) | NH₃ conversion (%) | yield (%) | N₂O (ppm) | NOₓ (ppm) |
| 9-fresh | 89.2 | 62.3 | 27.7 | 0.5 | 98.4 | 92.2 | 2.6 | 7.8 |
| 9-aged | 91.1 | 58.4 | 33.3 | 4.5 | 98.1 | 73.4 | 3.7 | 44.1 |
| 10-fresh | 89.7 | 65.7 | 24.8 | 0.3 | 98.3 | 95.0 | 1.5 | 3.8 |
| 10-aged | 88.4 | 70.1 | 18.8 | 0.6 | 97.5 | 80.0 | 2.3 | 31.8 |
| 11-fresh | 96.3 | 83.6 | 12.4 | 1.7 | 98.8 | 87.7 | 2.2 | 18.8 |
| 11-aged | 85.7 | 77.2 | 7.7 | 2.2 | 98.6 | 58.3 | 3.9 | 76.1 |
| 12-fresh | 95.1 | 83.7 | 11.2 | 1.4 | 98.7 | 94.0 | 1.6 | 6.7 |
| 12-aged | 90.4 | 82.3 | 7.6 | 1.5 | 97.9 | 81.5 | 2.6 | 28.8 |
| 13-aged | 81.8 | 75.2 | 6.5 | 0.5 | 98.2 | 81.5 | 3.5 | 27.9 |
| 8-fresh | 90.2 | 81.1 | 9.4 | 0.0 | 98.3 | 96.1 | 1.6 | 1.5 |
| 8-aged | 80.1 | 74.8 | 5.4 | 0.3 | 96.3 | 87.6 | 2.1 | 13.8 |

Table 3, examples 8-13, compares ASCs with Pt on alumina as a bottom layer with a full Cu-CHA top layer (Example 1), Pt on siliceous zeolite as bottom layer with full top layer (Example 10) and Pt on siliceous zeolite + Cu-CHA blend bottom layer with various top layer configurations (Examples 8, 11-13).

### Example 9 vs Example 10:

Both fresh and aged Examples 9 and 10 provided similar NH₃ conversions at 250°C and 450°C. When fresh, Examples 9 and 10 produced similar amount of N₂O at 250°C. However, after aging, Example 10 produced about 40% less N₂O at 250°C compared to Example 9. When fresh, Examples 9 and 10 produced similar amounts of NOₓ at 450°C. However, after aging, Example 10 produced about 25% less NOₓ at 250°C compared to Example 9. When fresh, Examples 9 and 10 provided similar N₂ yields at both 250°C and 450°C. However, after aging, Example 10 provided about 20% and 10% higher N₂ yield compared to Example 9 at 250°C and 450°C, respectively.

### Example 9 vs Example 11:

Both fresh and aged Examples 9 and 11 provided similar NH₃ conversions at 250°C and 450°C. At 250°C, fresh and aged Example 11 produced about 55% less and 75% less N₂O compared to fresh and aged Example 9, respectively. As a result, fresh and aged Example 11 provided about 30% higher and 30% higher N₂ yields compared to fresh and aged Example 9 at 250°C, respectively. At 450°C, fresh and aged Example 11 produced about 140% more and 70% more NOₓ compared to fresh and aged Example 9, respectively. As a result, fresh and aged Example 11 provided about 5% lower and 20% lower N₂ yield compared to fresh and aged Example 9 at 450°C, respectively.

### Example 9 vs Example 12:

Both fresh and aged Examples 1 and 12 provided similar NH₃ conversions at 250°C and 450°C. At 250°C, fresh and aged Example 12 produced about 60% less and 75% less N₂O compared to fresh and aged Example 9, respectively. As a result, fresh and aged Example 12 provided about 30% higher and 40% higher N₂ yield compared to fresh and aged Example 9 at 250°C, respectively. At 450°C, fresh and aged Example 12 produced similar amount and 35% less NOₓ compared to fresh and aged Example 9, respectively. As a result, fresh and aged Example 12 provided similar level and 10% higher N₂ yield compared to fresh and aged Example 9 at 450°C, respectively.

### Example 9 vs Example 13:

Aged Example 13 provided about 10% less NH₃ conversions at 250°C and a similar level of NH₃ conversion at 450°C compared to aged Example 9. At 250°C, aged Example 13 produced 80% less N₂O compared to aged Example 9. As a result, aged Example 13 provided about 30% higher N₂ yield compared to aged Example 9 at 250°C. At 450°C, aged Example 13 produced about 35% less NOₓ compared to aged Example 9. As a result, aged Example 13 provided about 10% higher N₂ yield compared to aged Example 9 at 450°C.

### Example 9 vs Example 8:

Fresh Examples 9 and 8 provided similar NH₃ conversions at 250°C and 450°C. Aged Example 8 provided 10% less NH₃ conversion at 250°C and a similar level of NH₃ conversion at 450°C compared to Example 9. At 250°C, fresh and aged Example 8 produced about 65% less and 85% less N₂O compared to fresh and aged Example 9, respectively. As a result, fresh and aged Example 8 provided about 30% higher and 30% higher N₂ yield compared to fresh and aged Example 9 at 250°C, respectively. At 450°C, fresh and aged Example 8 produced 80% less and 70% less NOₓ compared to fresh and aged Example 9, respectively. As a result, fresh and aged Example 8 provided 4% higher and 20% higher N₂ yield compared to fresh and aged Example 9 at 450°C, respectively.

The preceding examples are intended only as illustrations; the following claims define the scope of the invention.

## Claims

1. A catalyst comprising a combination of platinum on a support with low ammonia storage and a first SCR catalyst,
wherein the first SCR catalyst is a Cu-SCR catalyst comprising copper and a molecular sieve or a Fe-SCR catalyst comprising iron and a molecular sieve,
wherein the support with low ammonia storage is a siliceous support which consists of a silica or a zeolite with a silica-to-alumina ratio of ≥ 500, and
wherein the combination is a blend of the platinum on the support with low ammonia storage with the first SCR catalyst,
the catalyst further comprising a second SCR catalyst, where the second SCR catalyst is located adjacent to the blend of platinum on the support with low ammonia storage with the first SCR catalyst and at least partially overlaps the blend of platinum on the support with low ammonia storage and the first SCR catalyst.

2. The catalyst of claim 1, wherein the siliceous support comprises a silica or a zeolite with silica-to-alumina ratio of ≥ 1000.

3. The catalyst of claim 1, wherein the siliceous support comprises BEA, CDO, CON, FAU, MEL, MFI or MWW.

4. The catalyst of claim 1, wherein the ratio of the amount of the first SCR catalyst to the amount of platinum on the support with low ammonia storage is in the range of 0.1 to 300:1, preferably in the range of 3:1 to 300:1, inclusive, based on the weight of these components.

5. The catalyst of claim 1, wherein the blend of platinum on a support with low ammonia storage with the first SCR catalyst further comprises at least one of palladium (Pd), gold (Au) silver (Ag), ruthenium (Ru) or rhodium (Rh).

6. The catalyst of claim 1, wherein the molecular sieve is an aluminosilicate, an aluminophosphate (AIPO), a silico-aluminophosphate (SAPO), or a mixture thereof.

7. The catalyst of claim 1, wherein the molecular sieve is selected from:
(a) the group of Framework Types consisting of ACO, AEI, AEN, AFN, AFT, AFX, ANA, APC, APD, ATT, BEA, CDO, CHA, DDR, DFT, EAB, EDI, EPI, ERI, FER, GIS, GOO, IHW, ITE, ITW, LEV, KFI, MER, MFI, MON, NSI, OWE, PAU, PHI, RHO, RTH, SAT, SAV, SIV, THO, TSC, UEI, UFI, VNI, YUG and ZON, and a mixture and/or an intergrowth thereof; or
(b) the group of Framework Types consisting of AEI, AFX, BEA, CHA, DDR, ERI, FER, ITE, KFI, LEV, MFI and SFW, and a mixture and/or an intergrowth thereof.

8. The catalyst of claim 1, wherein the second SCR catalyst comprises a base metal, an oxide of a base metal, a noble metal, a molecular sieve, a metal exchanged molecular sieve, a mixed oxide, or a mixture thereof, wherein the base metal is selected from the group consisting of vanadium (V), molybdenum (Mo), tungsten (W), chromium (Cr), cerium (Ce), manganese (Mn), iron (Fe), cobalt (Co), nickel (Ni), and copper (Cu), and mixtures thereof, and
wherein the molecular sieve or the metal exchanged molecular sieve is small pore, medium pore, large pore or a mixture thereof.

9. The catalyst of claim 1, further comprising at least one base metal promoter which is Nb.

10. The catalyst of claim 8, wherein the second SCR catalyst comprises a small pore molecular sieve selected from the group consisting of aluminosilicate molecular sieves, metal-substituted aluminosilicate molecular sieves, aluminophosphate (AIPO) molecular sieves, metal-substituted aluminophosphate (MeAlPO) molecular sieves, silico-aluminophosphate (SAPO) molecular sieves, and metal substituted silico-aluminophosphate (MeAPSO) molecular sieves, and mixtures thereof.

11. A method of reducing N₂O formation from NH₃ in an exhaust gas, the method comprising contacting an exhaust gas comprising ammonia with a catalyst of any of the preceding claims.

## Patentansprüche

1. Katalysator, umfassend eine Kombination von Platin auf einer Stütze mit geringer Ammoniakspeicherung und einen ersten SCR-Katalysator,
wobei der erste SCR-Katalysator ein Cu-SCR-Katalysator ist, umfassend Kupfer und ein Molekularsieb, oder ein Fe-SCR-Katalysator, umfassend Eisen und ein Molekularsieb,
wobei der Stütze mit geringer Ammoniakspeicherung eine kieselsäurehaltige Stütze ist, die aus einer Kieselsäure oder einem Zeolith mit einem Verhältnis von Kieselsäure zu Aluminiumoxid von ≥ 500 besteht, und
wobei es sich bei der Kombination um eine Mischung aus dem Platin auf der Stütze mit geringer Ammoniakspeicherung und dem ersten SCR-Katalysator handelt,
der Katalysator ferner umfassend einen zweiten SCR-Katalysator, wobei der zweite SCR-Katalysator an die Platinmischung auf der Stütze mit geringer Ammoniakspeicherung mit dem ersten SCR-Katalysator angrenzt und mindestens teilweise die Platinmischung auf der Stütze mit geringer Ammoniakspeicherung und den ersten SCR-Katalysator überlappt.

2. Katalysator nach Anspruch 1, wobei die kieselsäurehaltige Stütze ein Siliciumdioxid oder einen Zeolith mit einem Verhältnis von Siliciumdioxid zu Aluminiumoxid von ≥ 1000 umfasst.

3. Katalysator nach Anspruch 1, wobei die kieselsäurehaltige Stütze BEA, CDO, CON, FAU, MEL, MFI oder MWW umfasst.

4. Katalysator nach Anspruch 1, wobei das Verhältnis der Menge des ersten SCR-Katalysators zu der Menge an Platin auf der Stütze mit geringer Ammoniakspeicherung im Bereich von 0,1 bis 300:1, vorzugsweise im Bereich von 3:1 bis einschließlich 300:1, bezogen auf das Gewicht dieser Komponenten, liegt.

5. Katalysator nach Anspruch 1, wobei die Platinmischung auf einer Stütze mit geringer Ammoniakspeicherung mit dem ersten SCR-Katalysator ferner mindestens eines von Palladium (Pd), Gold (Au), Silber (Ag), Ruthenium (Ru) oder Rhodium (Rh) umfasst.

6. Katalysator nach Anspruch 1, wobei das Molekularsieb ein Aluminosilikat, ein Aluminophosphat (AIPO), ein Silico-Aluminophosphat (SAPO) oder eine Mischung davon ist.

7. Katalysator nach Anspruch 1, wobei das Molekularsieb ausgewählt ist aus:
(a) der Gruppe der Rahmentypen, bestehend aus ACO, AEI, AEN, AFN, AFT, AFX, ANA, APC, APD, ATT, BEA, CDO, CHA, DDR, DFT, EAB, EDI, EPI, ERI, FER, GIS, GOO, IHW, ITE, ITW, LEV, KFI, MER, MFI, MON, NSI, OWE, PAU, PHI, RHO, RTH, SAT, SAV, SIV, THO, TSC, UEI, UFI, VNI, YUG und ZON, sowie einer Mischung und/oder einer Verwachsung davon; oder
(b) der Gruppe der Rahmentypen, bestehend aus AEI, AFX, BEA, CHA, DDR, ERI, FER, ITE, KFI, LEV, MFI und SFW, sowie einer Mischung und/oder einer Verwachsung davon.

8. Katalysator nach Anspruch 1, wobei der zweite SCR-Katalysator ein unedles Metall, ein Oxid eines unedlen Metalls, ein Edelmetall, ein Molekularsieb, ein metallgetauschtes Molekularsieb, ein Mischoxid oder eine Mischung davon umfasst, wobei das Basismetall ausgewählt ist aus der Gruppe, bestehend aus Vanadium (V), Molybdän (Mo), Wolfram (W), Chrom (Cr), Cer (Ce), Mangan (Mn), Eisen (Fe), Kobalt (Co), Nickel (Ni) und Kupfer (Cu) und Mischungen davon, und
wobei das Molekularsieb oder das metallgetauschte Molekularsieb kleinporig, mittelporig, großporig oder eine Mischung davon ist.

9. Katalysator nach Anspruch 1, ferner umfassend mindestens einen Basismetallpromotor, der Nb ist.

10. Katalysator nach Anspruch 8, wobei der zweite SCR-Katalysator ein kleinporiges Molekularsieb umfasst, das aus der Gruppe ausgewählt ist, bestehend aus Aluminosilicatmolekularsieben, metallsubstituierten Aluminosilicatmolekularsieben, Aluminophosphatmolekularsieben (AIPO), metallsubstituierten Aluminophosphatmolekularsieben (MeAlPO), Silicoaluminophosphatmolekularsieben (SAPO) und metallsubstituierten Silicoaluminophosphatmolekularsieben (MeAPSO) und Mischungen davon.

11. Verfahren zur Verringerung der N₂O-Bildung aus NH₃ in einem Abgas, wobei das Verfahren das Inkontaktbringen eines Ammoniak umfassenden Abgases mit einem Katalysator nach einem der vorstehenden Ansprüche umfasst.

## Revendications

1. Catalyseur comprenant une combinaison de platine sur un support à faible stockage d'ammoniac et un premier catalyseur SCR,
dans lequel le premier catalyseur SCR est un catalyseur Cu-SCR comprenant du cuivre et un tamis moléculaire ou un catalyseur Fe-SCR comprenant du fer et un tamis moléculaire,
dans lequel le support à faible stockage d'ammoniac est un support siliceux qui est constitué d'une silice ou d'une zéolithe avec un rapport silice/alumine ≥ 500, et
dans lequel la combinaison est un mélange du platine sur le support à faible stockage d'ammoniac avec le premier catalyseur SCR,
le catalyseur comprenant en outre un second catalyseur SCR, où le second catalyseur SCR est situé à côté du mélange de platine sur le support à faible stockage d'ammoniac avec le premier catalyseur SCR et recouvre au moins partiellement le mélange de platine sur le support à faible stockage d'ammoniac et le premier catalyseur SCR.

2. Catalyseur selon la revendication 1, dans lequel le support siliceux comprend une silice ou une zéolite avec un rapport silice/alumine ≥ 1000.

3. Catalyseur selon la revendication 1, dans lequel le support siliceux comprend BEA, CDO, CON, FAU, MEL, MFI ou MWW.

4. Catalyseur selon la revendication 1, dans lequel le rapport entre la quantité du premier catalyseur SCR et la quantité de platine sur le support à faible stockage d'ammoniac est compris dans la plage de 0,1 à 300:1, de préférence dans la plage de 3:1 à 300:1, bornes incluses, sur la base du poids de ces composants.

5. Catalyseur selon la revendication 1, dans lequel le mélange de platine sur un support à faible stockage d'ammoniac avec le premier catalyseur SCR comprend en outre au moins l'un parmi le palladium (Pd), l'or (Au), l'argent (Ag), le ruthénium (Ru) ou le rhodium (Rh).

6. Catalyseur selon la revendication 1, dans lequel le tamis moléculaire est un aluminosilicate, un aluminophosphate (AIPO), un silico-aluminophosphate (SAPO), ou un mélange de ceux-ci.

7. Catalyseur selon la revendication 1, dans lequel le tamis moléculaire est choisi parmi :
(a) le groupe de types de structures constitué d'ACO, AEI, AEN, AFN, AFT, AFX, ANA, APC, APD, ATT, BEA, CDO, CHA, DDR, DFT, EAB, EDI, EPI, ERI, FER, GIS, GOO, IHW, ITE, ITW, LEV, KFI, MER, MFI, MON, NSI, OWE, PAU, PHI, RHO, RTH, SAT, SAV, SIV, THO, TSC, UEI, UFI, VNI, YUG et ZON, et un mélange et/ou une intercroissance de ceux-ci ; ou
(b) le groupe de types de structures constitué d'AEI, AFX, BEA, CHA, DDR, ERI, FER, ITE, KFI, LEV, MFI et SFW, et un mélange et/ou une intercroissance de ceux-ci.

8. Catalyseur selon la revendication 1, dans lequel le second catalyseur SCR comprend un métal de base, un oxyde d'un métal de base, un métal noble, un tamis moléculaire, un tamis moléculaire à échange métallique, un oxyde mixte, ou un mélange de ceux-ci, dans lequel le métal de base est choisi dans le groupe constitué de vanadium (V), molybdène (Mo), tungstène (W), chrome (Cr), cérium (Ce), manganèse (Mn), fer (Fe), cobalt (Co), nickel (Ni), et cuivre (Cu), et mélanges de ceux-ci, et
dans lequel le tamis moléculaire ou le tamis moléculaire à échange métallique est à petits pores, à pores moyens, à grands pores ou un mélange de ceux-ci.

9. Catalyseur selon la revendication 1, comprenant en outre au moins un promoteur de métal de base qui est Nb.

10. Catalyseur selon la revendication 8, dans lequel le second catalyseur SCR comprend un tamis moléculaire à petits pores choisi dans le groupe constitué de tamis moléculaires d'aluminosilicate, tamis moléculaires d'aluminosilicate à substitution métallique, tamis moléculaires d'aluminophosphate (AIPO), tamis moléculaires d'aluminophosphate à substitution métallique (MeAlPO), tamis moléculaires de silico-aluminophosphate (SAPO), et tamis moléculaires de silico-aluminophosphate à substitution métallique (MeAPSO), et mélanges de ceux-ci.

11. Procédé de réduction de la formation de N₂O à partir de NH₃ dans un gaz d'échappement, le procédé comprenant la mise en contact d'un gaz d'échappement comprenant de l'ammoniac avec un catalyseur selon l'une quelconque des revendications précédentes.
